(19) Europäisches Patentamt
European Patent Office
Office européen des brevets

(11) **EP 2 939 890 B1**

(12) **EUROPÄISCHE PATENTSCHRIFT**

(45) Veröffentlichungstag und Bekanntmachung des Hinweises auf die Patenterteilung:
**22.08.2018 Patentblatt 2018/34**

(51) Int Cl.:
*B60T 13/14* *(2006.01)*     *B60T 15/36* *(2006.01)*
*B60T 17/06* *(2006.01)*

(21) Anmeldenummer: **15156513.2**

(22) Anmeldetag: **25.02.2015**

(54) **Hydraulikvorrichtung einer Fahrzeugbremsanlage mit einem Dämpfer**

Hydraulic device of a vehicle braking system with a damper

Dispositif hydraulique d'une installation de frein de véhicule dotée d'un amortisseur

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.04.2014 DE 102014207738**

(43) Veröffentlichungstag der Anmeldung:
**04.11.2015 Patentblatt 2015/45**

(73) Patentinhaber: **ROBERT BOSCH GMBH**
**70442 Stuttgart (DE)**

(72) Erfinder: **Biehler, Marcus**
**71543 Wuestenrot (DE)**

(56) Entgegenhaltungen:
**DE-A1- 19 953 001**     **JP-A- H04 126 650**
**JP-A- 2001 225 735**     **US-A- 5 255 963**
**US-A1- 2002 101 114**

EP 2 939 890 B1

**Beschreibung**

Stand der Technik

Die Erfindung betrifft eine Hydraulikvorrichtung für eine Fahrzeugbremsanlage mit einer Hydraulikpumpe zum Pumpen eines Hydraulikfluidstroms in eine Dämpferleitung, an der ein Dämpfer fluidleitend angeschlossen ist. Ferner betrifft die Erfindung eine Verwendung einer solchen Hydraulikvorrichtung an einer Fahrzeugbremsanlage.

In bekannten Fahrzeugbremsanlagen, wie sie insbesondere für Personen- und Lastkraftwagen verwendet werden, werden Hydraulikvorrichtungen zum Bereitstellen eines geregelten Bremsdrucks an zugehörigen Radbremszylindern eingesetzt. Vor allem können damit auch Funktionen eines Antiblockiersystems (ABS), einer Antischlupfregelung (ASR) und eines elektronischen Stabilitätsprogramms (ESP) realisiert werden.

Bekannte Hydraulikvorrichtungen umfassen dazu eine Hydraulikpumpe, mit der ein Hydraulikfluid, wie zum Beispiel Bremsflüssigkeit, durch ein zugehöriges Leitungssystem gepumpt werden kann. Eine solche Hydraulikpumpe ist in der Regel mit mehreren Pumpenelementen gestaltet, die zeitlich versetzt das Hydraulikfluid fördern. Dabei treten Schwankungen im Hydraulikfluidstrom auf. Solche Schwankungen verursachen Druckpulsationen in der Hydraulikvorrichtung selbst sowie in der restlichen Fahrzeugbremsanlage, was unerwünschte Geräusche verursacht. Ferner entstehen Geräusche durch Druckwellen aufgrund plötzlicher Druckanstiege beim Schalten von in der Fahrzeugbremsanlage verbauten Ventilen. Solche Geräusche und Pulsationen werden als Noise Vibration Harshness (NVH) bezeichnet Ein Beispiel von dem Stand der Technik ist in DE 199 53 001 A1 offenbart. Um ein möglichst günstiges, das heißt geräusch- und schwingungsarmes NVH-Verhalten eines Fahrzeugs zu erreichen, werden in der Hydraulikvorrichtung Dämpfer eingesetzt. Ein solcher Dämpfer weist dazu in der Regel ein Dämpfervolumen auf, das bis zu einem bestimmten Maximalwert veränderbar ist. In das Dämpfervolumen kann vorrübergehend Hydraulikfluid aufgenommen werden, womit Schwankungen im Hydraulikfluidstrom eingedämmt werden.

Offenbarung der Erfindung

Erfindungsgemäß ist eine Hydraulikvorrichtung für eine Fahrzeugbremsanlage geschaffen, mit einer Hydraulikpumpe zum Pumpen eines Hydraulikfluidstroms in eine Dämpferleitung, an der ein Dämpfer fluidleitend angeschlossen ist. Dabei sind eine den Dämpfer umgehende Bypassleitung sowie ein den Hydraulikfluidstrom wahlweise durch die Dämpferleitung oder die Bypassleitung leitendes Bypassventil vorgesehen.

Der Erfindung liegt die Erkenntnis zugrunde, dass ein Dämpfer nicht nur die genannten Druckpulsationen dämpft, sondern auch einen Druckaufbau des Bremsdrucks verlangsamt, insbesondere an dem mindestens einen zugehörigen Radbremszylinder. Der Dämpfer weist dabei insbesondere ein Dämpfervolumen auf, das ein gewisses Zusatzvolumen in der Fahrzeugbremsanlage, insbesondere in deren Leitungssystem bildet. Jedes Zusatzvolumen verlängert die Zeitdauer, bis ein bestimmter Hydraulikfluidstrom im Leitungssystem erreicht ist, mit dem dann ein bestimmter Bremsdruck aufgebaut werden kann. Damit wirkt sich jedes Zusatzvolumen eines Dämpfers immer dann nachteilig aus, wenn in kurzer Zeit besonders viel Hydraulikfluid an einer bestimmten Stelle in der Fahrzeugbremsanlage benötigt wird. Vor allem, wenn an mindestens einem Radbremszylinder beispielsweise zum Unfallschutz schnell ein entsprechend hoher Bremsdruck erzeugt werden soll, sollte ein schneller bzw. hochdynamischer Druckaufbau möglich sein.

Dazu sieht die erfindungsgemäße Lösung insbesondere die zum Dämpfer führende Dämpferleitung und die den Dämpfer umgehende Bypassleitung vor, die über das Bypassventil wahlweise angesteuert werden können. Mit dem Bypassventil kann erfindungsgemäß der Hydraulikfluidstrom je nach Bedarf in den Dämpfer oder am Dämpfer vorbei geleitet werden. Entsprechend kann ein besonders schneller Druckaufbau realisiert werden, wenn das Bypassventil den Hydraulikfluidstrom in die Bypassleitung und damit am Dämpfer vorbei leitet, womit insbesondere das Zusatzvolumen des Dämpfers umgangen ist. Zusätzlich kann die bekannte dämpfende Wirkung des Dämpfers erreicht werden, wenn das Bypassventil den Hydraulikfluidstrom durch die Dämpferleitung zum Dämpfer führt. Also sind mit der erfindungsgemäßen Hydraulikvorrichtung zwei unterschiedliche Dämpfungsfunktionen ermöglicht.

Erfindungsgemäß vorteilhaft ist in der Dämpferleitung stromabwärts vom Dämpfer eine Drossel vorgesehen. Die Drossel ist dazu bevorzugt mit variabler Drosselwirkung gestaltet. Mit der Drossel kann der Hydraulikfluidstrom in seinem Durchfluss gestaut werden. Dazu stellt die Drossel eine Verengung des Leitungsquerschnitts der Dämpferleitung dar, ist also ein lokaler Strömungswiderstand. Vor der Drossel herrscht mehr Druck im Hydraulikfluid als nach der Drossel, womit der Hydraulikfluidstrom zusätzlich zum Dämpfer hin gedrängt ist. Mit der bevorzugten Gestaltung der Drossel als einstellbare bzw. variable Drossel kann der Hydraulikfluidstrom variabel gestaltet sein, sodass mit einer solchen Dämpfer-Drossel-Kombination eine besonders bedarfsgerechte Dämpfung des Hydraulikfluidstroms erreichbar ist.

Vorteilhaft ist in der Dämpferleitung stromabwärts des Dämpfers ein in Dämpferrichtung schließendes Rückschlagventil vorgesehen, wie es beispielsweise zum Abtrennen eines Dämpfervolumens während einer Teilbremsung verwendet wird. Besonders vorteilhaft ist ein solches Rückschlagventil zusätzlich zur Drossel stromabwärts vor oder nach der Drossel in der Dämpferleitung angeordnet. Das derartige Rückschlagventil ist verschlossen, wenn stromabwärts vom Rückschlagventil ein höherer Druck im Hydraulikfluid herrscht als stromaufwärts. Ein solcher Fall tritt insbesondere dann ein, wenn der Hydraulikfluidstrom nicht durch die Dämpferleitung, sondern durch die Bypassleitung geführt ist. In Kombination mit dem geschlossenen Rückschlagventil ist der Dämpfer vollständig hydraulisch abgetrennt, was einen besonders schnellen Druckaufbau an zugehörigen Radbremszylindern sicherstellt.

Ferner ist gemäß der Erfindung das Bypassventil vorzugsweise in Abhängigkeit einer Volumenstrommenge pro Zeit Q bzw. eines Volumenstroms des Hydraulikfluidstroms gesteuert. Die Volumenstrommenge pro Zeit Q beschreibt, wie viel Hydraulikfluidvolumen V sich innerhalb einer bestimmten Zeitspanne t durch einen Leitungsquerschnitt einer in der Hydraulikvorrichtung vorgesehenen Leitung bewegt:

$$Q = V/t = dV/dt = \Delta V/\Delta t$$

Der Volumenstrom Q berechnet sich dabei aus dem Produkt einer mittleren Strömungsgeschwindigkeit v und einer Querschnittsfläche A an dem Leitungsquerschnitt:

$$Q = v \cdot A$$

Je nach Größe des Volumenstroms Q ist nun erfindungsgemäß vorteilhaft eine Ansteuerung des Dämpfers oder eine Umgehung des Dämpfers mittels des Bypassventils angestrebt. Bevorzugt führt das Bypassventil den Hydraulikfluidstrom bei einem ersten Volumenstrom in die Dämpferleitung und bei einem im Vergleich zum ersten Volumenstrom höheren, zweiten Volumenstrom in die Bypassleitung. Derart geführt können beim ersten, geringeren Volumenstrom die dämpfende Wirkung des Dämpfers und damit sein positiver Einfluss auf das NVH-Verhalten des Fahrzeugs ausgenutzt werden. Beim zweiten, höheren Volumenstrom hingegen wird der Dämpfer mittels der Bypassleitung umgangen, sodass der Hydraulikfluidstrom im Vergleich zu einer Leitung über den Dämpfer wesentlich schneller durch die Hydraulikvorrichtung, insbesondere zu den zugehörigen Radbremszylindern geleitet wird. Damit ist ein besonders schneller, hochdynamischer Druckaufbau bei höherem Volumenstrom gewährleistet. Insgesamt sind mit der erfindungsgemäßen Lösung also zugleich zwei Anforderungen an die Hydraulikvorrichtung für eine Fahrzeugbremsanlage verwirklicht, und zwar ein günstiges NVH-Verhalten und eine hohe mögliche Druckaufbaudynamik.

Weiterhin ist das Bypassventil erfindungsgemäß vorteilhaft mit einer beweglichen Blende gestaltet. Die Blende verengt als lokaler Strömungswiderstand den Leitungsquerschnitt sprungartig bis zu einem Blendendurchmesser. Dadurch wird das Hydraulikfluid vor der Blende aufgestaut, sodass der Hydraulikfluiddruck in Strömungsrichtung vor der Blende höher ist als der Hydraulikfluiddruck nach der Blende. Auf einen solchen Druckabfall als Druckänderung wirkt sich der Volumenstrom überproportional stark aus, da gemäß des mathematischen Zusammenhangs einer hydraulischen Blendengleichung der Druckabfall quadratisch mit dem Volumenstrom ansteigt. Ein zunehmender Volumenstrom führt also zu einem überproportionalen Druckabfall. Eine Verdreifachung des Volumenstroms führt zum Beispiel zu einer Verneunfachung des Druckabfalls. Der dabei vor der Blende herrschende höhere Hydraulikfluiddruck übt auf die Blende über deren Blendenfläche Druck aus, der zu einem Kraftüberschuss vor der Blende führt. Ist die Blende beweglich gestaltet, kann die Blende bei einem entsprechend hohen Kraftüberschuss dann vom Volumenstrom bewegt, insbesondere verschoben werden. Damit ist überraschend auf besonders einfache Art und Weise eine volumenstromabhängige Betätigung des Bypassventils erreicht.

Eine solche Betätigung ist zusätzlich regelbar, wenn der Blendendurchmesser vorteilhaft variabel gestaltet ist. Je nach Bedarf kann dann der Blendendurchmesser verkleinert oder vergrößert werden. Eine Vergrößerung des Blendendurchmessers mindert den Druckabfall an der beweglichen Blende, das heißt, dass dann im Endeffekt weniger Kraftüberschuss auf die bewegliche Blende wirkt. Damit wird die Blende mit dem vergrößerten Blendendurchmesser erst bei einem höheren Volumenstrom vom Hydraulikfluidstrom bewegt.

Zudem ist erfindungsgemäß vorteilhaft mit einem Bewegen der beweglichen Blende die Dämpferleitung zu verschließen und die Bypassleitung zu öffnen. Zum Bewegen der beweglichen Blende muss ein ausreichend hoher Volumenstrom vorliegen. Ist dieser ausreichend hohe Volumenstrom erreicht, so ist insbesondere nur mit einer Bewegung der Blende sowohl die Dämpferleitung zu verschließen als auch die Bypassleitung zu öffnen. Damit ist eine überraschenderweise besonders einfache volumenstromabhängige Steuerung des Bypassventils verwirklicht. Der ausreichend hohe Volumenstrom kann dann, wie bereits beschrieben, unter Umgehung des Dämpfers besonders schnell durch die Bypassleitung für weitere Funktionen, insbesondere zum Ausüben von Druck auf zugehörige Radbremszylinder genutzt werden.

Bevorzugt ist dabei in Strömungsrichtung nach der beweglichen Blende eine Rückstellfeder vorgesehen, deren Federkraft dem Volumenstrom, insbesondere dem Kraftüberschuss des Volumenstroms entgegenwirkt. Bei Unterschreiten eines bestimmten Volumenstroms drängt dann die Rückstellfeder die bewegliche Blende wieder zurück, öffnet damit die Dämpferleitung und verschließt besonders bevorzugt zugleich die Bypassleitung. Zudem kann mit einer Variation der Federkraft die Steuerung des Bypassventils beeinflusst werden.

Ferner ist erfindungsgemäß die bewegliche Blende in vorteilhafter Weise als ein in einem Blendenzylinder verschiebbarer Blendenkolben gestaltet. Die derart gestaltete Blende ist mit ihrer Zylinderform auch noch bei besonders hohen Volumenströmen und damit verbundenen, auf die Blende wirkenden, besonders hohen Kraftüberschüssen stabil. Eine solche Stabilität ermöglicht einen zuverlässigen, wenig störanfälligen, besonders schnellen Druckaufbau bei einem entsprechend hohem Volumenstrom bei zugleich langer Lebensdauer der Blende.

Bevorzugt ist dabei der Blendenkolben als becherförmiger Blendenkolben mit einer Becherwand und einem Becherboden gestaltet, der eine Blendenöffnung aufweist. Derart gestaltet kann der Volumenstrom in den becherförmigen Blendenkolben einströmen und übt dann am Becherboden seinen Kraftüberschuss aus. Zusätzlich wird ein solcher Kraftüberschuss auch zum Teil auf die Becherwand übertragen, womit der Kraftüberschuss über eine besonders große Oberfläche auf den becherförmigen Blendenkolben übertragbar ist. Der becherförmige Blendenkolben kann damit vom Volumenstrom in Strömungsrichtung mit besonders gleichmäßiger Kraftübertragung verschoben werden.

Des Weiteren ist gemäß der Erfindung vorteilhaft mit einem Verschieben des Blendenkolbens eine am Blendenzylinder angeordnete Bypassleitungsöffnung zu öffnen. Derart angeordnet kann während des Betriebs in besonders kompakter Bauweise das Bypassventil mit der Bypassleitung je nach Volumenstrom fluidleitend verbunden werden.

Überdies ist vorzugsweise in dem Blendenkolben eine Blendenöffnung vorgesehen und mit einem Verschieben des Blendenkolbens die Blendenöffnung zu verschließen. Damit ist besonders bauteilsparend allein mit dem Verschieben des Blendenkolbens die Blendenöffnung bei einem ausreichend hohen Volumenstrom verschließbar. Bevorzugt ist in Strömungsrichtung nach der Blendenöffnung eine Dämpferleitungsöffnung angeordnet, sodass mit dem Verschließen der Blendenöffnung kompakt zugleich die Dämpferleitung zu verschließen ist. Besonders bevorzugt sind mit einem Verschieben des Blendenkolbens zugleich die am Blendenzylinder angeordnete Bypassleitung zu öffnen und die in Strömungsrichtung nach der Blendenöffnung positionierte Dämpferleitung zu verschließen. Mit nur einer Bewegung des Blendenkolbens sind damit zugleich zwei Funktionen erfüllt.

Im Übrigen ist erfindungsgemäß vorteilhaft ein Blendenstößel vorgesehen, gegen den der Blendenkolben beim Verschieben unter gleichzeitigem Verschließen der Blendenöffnung bewegbar ist. In verschlossenem Zustand liegt dann die Blende an ihrer Blendenöffnung am Blendenstößel besonders gut abdichtend an. Zudem hat sich der Blendenstößel im geöffneten Zustand strömungstechnisch als besonders günstig erwiesen, da das durch die Blendenöffnung geströmte Hydraulikfluid an dem Blendenstößel ohne große Strömungsverluste vorbeiströmen kann.

Ferner ist die Erfindung auch auf eine Verwendung einer derartigen Hydraulikvorrichtung an einer Fahrzeugbremsanlage gerichtet. Damit ist ein günstiges NVH-Verhalten des Fahrzeugs bei zugleich hochdynamischem Druckaufbau verwirklicht, insbesondere im Falle eines erforderlichen Fußgängerschutzes. Eine Wirkung des erfindungsgemäß volumenstromabhängig bzw. hydraulikfluidvolumenstromabhängig gesteuerten Bypassventils ist unter allen Betriebsbedingungen gegeben.

Bei einer geringen Druckaufbaudynamik und damit bei einem geringen mittleren Volumenstrom des Hydraulikfluids lässt sich das Bypassventil mittels geeigneter Wahl des Blendendurchmessers der Blende und der Federkraft der Rückstellfeder so einstellen, dass die Dämpferleitung geöffnet wird. Damit wird der gesamte Hydraulikfluidstrom durch den Dämpfer gezwungen.

Bei einer hohen Druckaufbaudynamik führt ein hoher mittlerer Volumenstrom des Hydraulikfluidstroms dazu, dass bei geeigneter Wahl des Blendendurchmessers und der Federkraft der gesamte Hydraulikfluidstrom durch die Bypassleitung am Dämpfer vorbeigeleitet wird. Damit wird der gesamte Hydraulikfluidstrom schnell an zugehörigen Radbremszylindern bereitgestellt, womit eine schnelle und hohe Bremswirkung erreicht wird.

Bei einer ABS- oder Teilbremsung hat das erfindungsgemäße Bypassventil keine Auswirkungen.

Bei Tieftemperatur führt eine zunehmende Viskosität des Hydraulikfluids dazu, dass die Bypassleitung schon bei einem geringeren mittleren Volumenstrom freigegeben wird, was verschleiß- und kraftstoffsparend eine Motorlast insbesondere eines die Hydraulikpumpe antreibenden Antriebsmotors senkt.

Ferner wird ein zu Beginn eines Förderhubs der Hydraulikpumpe auftretendes, sogenanntes "Ticker"-Geräusch gedämmt. Zu Beginn des Förderhubs ist nämlich zwar eine hohe Drucküberhöhung vorhanden, wird aber gleichzeitig kaum Hydraulikfluidvolumen verschoben. Ein damit vorherrschender sehr geringer Volumenstrom leitet den Hydraulikfluidstrom also durch den Dämpfer, der ein solches "Ticker"-Geräusch dämpft.

Nachfolgend wird ein Ausführungsbeispiel der erfindungsgemäßen Lösung anhand der beigefügten schematischen Zeichnungen näher erläutert. Es zeigt:

Fig. 1     einen hydraulischen Schaltplan einer Anordnung eines Dämpfers an einer Fahrzeugbremsanlage gemäß dem Stand der Technik,

Fig. 2     einen hydraulischen Schaltplan einer Anordnung eines Ausführungsbeispiels einer erfindungsgemäßen Hydraulikvorrichtung an einer Fahrzeugbremsanlage,

Fig. 3     einen vergrößerten Längsschnitt einer Ausführungsvariante eines Bypassventils des Ausführungsbeispiels gemäß Fig. 2 mit einer ersten Ventilstellung und

Fig. 4     die Ansicht gemäß Fig. 3 mit einer zweiten Ventilstellung.

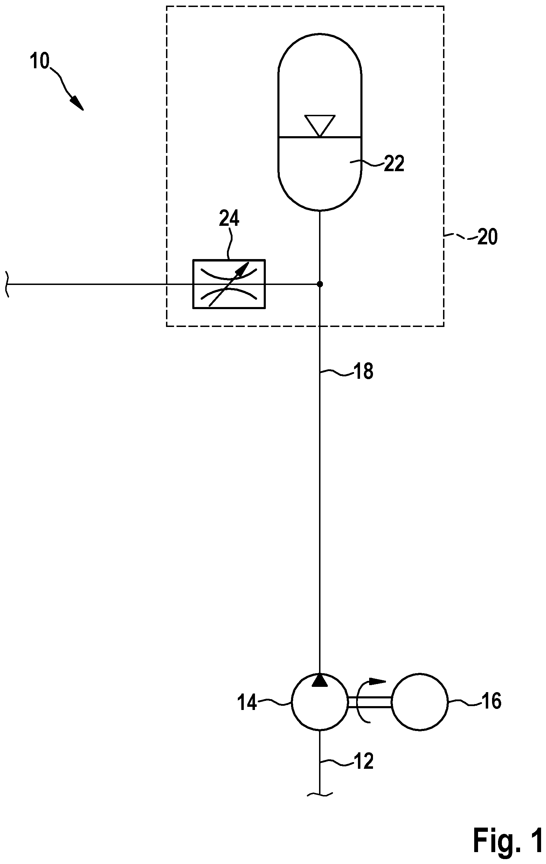

In Fig. 1 ist eine Anordnung 10 einer Fahrzeugbremsanlage dargestellt, bei der an einer Zuströmleitung 12 eine Kolbenpumpe als Hydraulikpumpe 14 angeordnet ist. Die Hydraulikpumpe 14 ist als Volumenstromquelle mit zwei nicht näher dargestellten Pumpenelementen gestaltet, die von einem Antriebsmotor 16 mittels eines Exzenters angetrieben sind. Die Pumpenelemente fördern im Betrieb ein Hydraulikfluid, vorliegend Bremsflüssigkeit, durch die Zuströmleitung 12, wobei ein Hydraulikfluidstrom erzeugt wird, der aufgrund der an den Pumpenelementen alternierend wirkenden Pumpenkolben pulsiert. Die Hydraulikpumpe 14 ist in einem nicht weiter dargestellten Hydraulikaggregat angeordnet und fördert den pulsierenden Fluidstrom bzw. Hydraulikfluidstrom in eine Abströmleitung bzw. Dämpferleitung 18. An der Dämpferleitung 18 ist ein Druckpulsationsdämpfer bzw. eine Dämpfer-Drossel-Kombination 20 angeordnet. Die Dämpfer-Drossel-Kombination 20 dient zum Glätten der pulsierenden Strömung und weist dazu einen Dämpfer 22 in Form einer Dämpferkammer auf, dem eine Drossel 24 nachgeschaltet ist. Die Drossel 24 ist einstellbar mit variabler Drosselwirkung gestaltet.

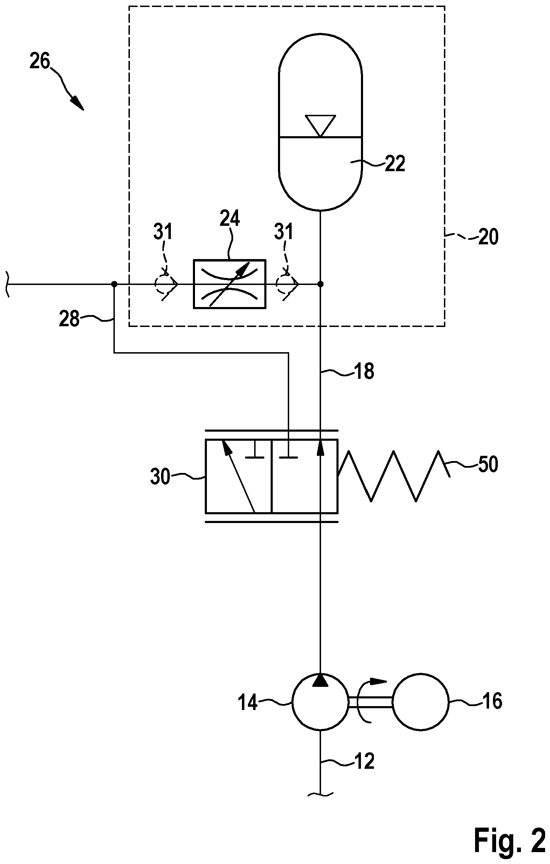

Fig. 2 zeigt eine Hydraulikvorrichtung 26 einer weiter nicht dargestellten Fahrzeugbremsanlage, bei der im Unterschied zur Anordnung 10 eine Bypassleitung 28 und ein Bypassventil 30 vorgesehen sind. Das Bypassventil 30 ist in Abhängigkeit eines von der Hydraulikpumpe 14 erzeugten Volumenstroms Q des Hydraulikfluids steuerbar. Dabei bewirkt ein normaler, vergleichsweise niedriger Volumenstrom, dass das Bypassventil 30 den Hydraulikfluidstrom durch die Dämpferleitung 18 führt. Ein im Vergleich dazu erhöhter Volumenstrom führt dazu, dass das Bypassventil 30 den Hydraulikfluidstrom durch die Bypassleitung 28 leitet, womit die gesamte Dämpfer-Drossel-Kombination 20 einschließlich des Dämpfers 22 umgangen wird.

Stromabwärts vom Dämpfer 22 ist ferner ein Rückschlagventil 31 in der Dämpferleitung 18 vorgesehen, das wahlweise vor oder nach der Drossel 24 angeordnet ist. Das Rückschlagventil 31 ist in Dämpferrichtung schließend gestaltet. Ein solches Rückschlagventil 31 ist dann verschlossen, wenn stromabwärts vom Rückschlagventil 31 ein höherer Druck im Hydraulikfluid herrscht als stromaufwärts. Ein verschlossenes Rückschlagventil 31 und eine die Dämpferleitung 18 verschließende Ventilstellung des Bypassventils 30 trennen den Dämpfer 22 hydraulisch vollkommen vom nicht weiter dargestellten Leitungssystem der Fahrzeugbremsanlage ab.

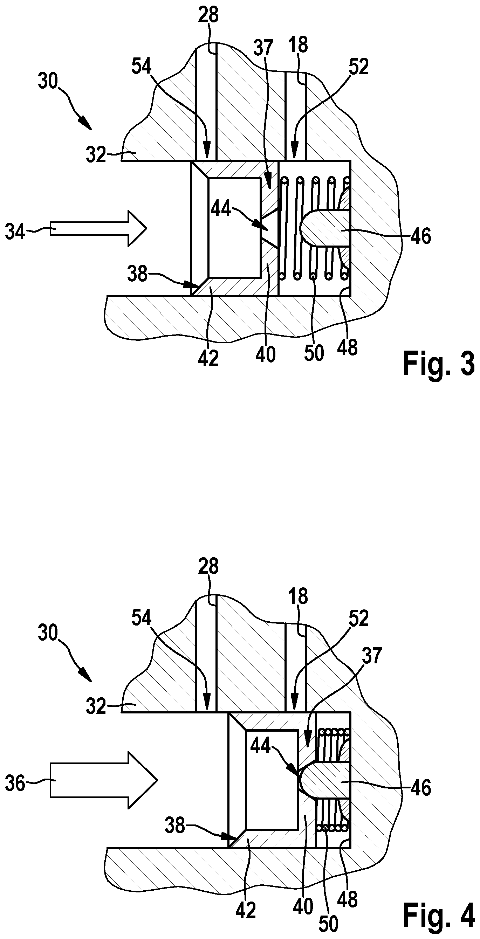

Fig. 3 und Fig. 4 verdeutlichen im Detail in zwei Ventilstellungen ein volumenstromabhängig steuerbares Bypassventil 30, das einen Blendenzylinder 32 umfasst, in den das Hydraulikfluid während des Betriebes in Strömungsrichtung einströmt. Dabei strömt in Fig. 3 als Hydraulikfluidstrom eine erste Volumenstrommenge pro Zeit 34 ein und in Fig. 4 eine zweite Volumenstrommenge pro Zeit 36, die wesentlich größer ist als die erste Volumenstrommenge pro Zeit 34.

Im Blendenzylinder 32 ist als bewegliche Blende 37 ein verschiebbarer Blendenkolben 38 angeordnet, der als becherförmiger Zylinder mit einem weitgehend geschlossenen Becherboden 40 und einer Becherwand 42 gestaltet ist. Im Zentrum des Becherbodens 40 befindet sich eine Blendenöffnung 44, die kegelstumpfförmig mit einem in Strömungsrichtung zunehmenden Querschnitt gestaltet ist. Zur Blendenöffnung 44 annähernd komplementär geformt befindet sich in Strömungsrichtung nach dem Blendenkolben 38 ein Blendenstößel 46, der im Zentrum einer Stirnseite 48 des Blendenzylinders 32 angebracht ist. Zudem ist zwischen der Stirnseite 48 und dem Becherboden 40 eine ringförmig gestaltete Rückstellfeder 50 vorgesehen, die den Blendenstößel 46 umgibt. An der Rückstellfeder 50 kann das Hydraulikfluid bei geöffneter Blendenöffnung 44 vorbeiströmen und durch eine in dem Blendenzylinder 32 vorgesehene Dämpferleitungsöffnung 52 in die Dämpferleitung 18 einströmen. Ferner verschließt bei geöffneter Blendenöffnung 44 die Becherwand 42 des Blendenkolbens 38 eine in dem Blendenzylinder 32 in Strömungsrichtung vor dem Blendenkolben 38 vorgesehene Bypassleitungsöffnung 54, die in die Bypassleitung 28 führt (Fig. 3).

Je kleiner eine Volumenstrommenge pro Zeit ist, desto mehr drängt die am Becherboden 40 anliegende Rückstellfeder 50 den Blendenkolben 38 entgegen der Strömungsrichtung zurück. Beispielsweise sind bei der ersten Volumenstrommenge pro Zeit 34 die Blendenöffnung 44 und damit die Dämpferleitungsöffnung 52 geöffnet und zugleich die Bypassleitungsöffnung 54 verschlossen. Damit wird der Hydraulikfluidstrom durch die Dämpferleitung 18 geführt (Fig. 3).

Je höher eine Volumenstrommenge pro Zeit des Hydraulikfluidstroms ist, desto stärker drängt der Hydraulikfluidstrom den Blendenkolben 38 entgegen einer Federkraft der Rückstellfeder 50 in Richtung des Blendenstößels 46. Wird während des Betriebs beispielsweise die zweite Volumenstrommenge 36 pro Zeit erzeugt, so drängt der Hydraulikfluidstrom den Blendenkolben 38 gegen den Blendenstößel 46. Der Blendenstößel 46 verschließt dann im Zusammenwirken mit dem daran anliegenden Becherboden 40 die Blendenöffnung 44. Zugleich verschließt die Becherwand 42 die Dämpferleitungsöffnung 52 und ist so weit in Strömungsrichtung entlang des Blendenzylinders 32 verschoben, dass die Bypassleitungsöffnung 54 freigegeben ist. Damit wird also der Hydraulikfluidstrom bei der im Vergleich zur ersten Volumenstrommenge pro Zeit 34 wesentlich größeren zweiten Volumenstrommenge pro Zeit 36 in die Bypassleitung 28 geführt. Derart geführt wird die gesamte Dämpfer-Drossel-Kombination 20 für einen schnellen, hochdynamischen Druckaufbau an zugehörigen Radbremszylindern umgangen (Fig. 4).

Mittels einer Variation der Rückstellfeder 50 in ihrer Federkraft und/oder einer Variation des Blendendurchmessers der Blendenöffnung 44 kann die derartige volumenstromabhängige Steuerung des Bypassventils 30 je nach Bedarf zusätzlich beeinflusst werden.

**Patentansprüche**

1. Hydraulikvorrichtung (26) für eine Fahrzeugbremsanlage mit einer Hydraulikpumpe (14) zum Pumpen eines Hydraulikfluidstroms in eine Dämpferleitung (18), an der ein Dämpfer (22) fluidleitend angeschlossen ist,
   **dadurch gekennzeichnet, dass** eine den Dämpfer (22) umgehende Bypassleitung (28) sowie ein den Hydraulikfluidstrom wahlweise durch die Dämpferleitung (18) oder die Bypassleitung (28) leitendes Bypassventil (30) vorgesehen sind.

2. Hydraulikvorrichtung nach Anspruch 1,
   **dadurch gekennzeichnet, dass** in der Dämpferleitung (18) stromabwärts vom Dämpfer (22) eine Drossel (24) vorgesehen ist.

3. Hydraulikvorrichtung nach Anspruch 1 oder 2,
   **dadurch gekennzeichnet, dass** das Bypassventil (30) in Abhängigkeit einer Volumenstrommenge pro Zeit (34, 36) des Hydraulikfluidstroms gesteuert ist.

4. Hydraulikvorrichtung nach einem der Ansprüche 1 bis 3,
   **dadurch gekennzeichnet, dass** das Bypassventil (30) mit einer beweglichen Blende (37) gestaltet ist.

5. Hydraulikvorrichtung nach Anspruch 4,
   **dadurch gekennzeichnet, dass** mit einem Bewegen der beweglichen Blende (37) die Dämpferleitung (18) zu verschließen und die Bypassleitung (28) zu öffnen ist.

6. Hydraulikvorrichtung nach Anspruch 4 oder 5,
   **dadurch gekennzeichnet, dass** die bewegliche Blende (37) als ein in einem Blendenzylinder (32) verschiebbarer Blendenkolben (38) gestaltet ist.

7. Hydraulikvorrichtung nach Anspruch 6,
   **dadurch gekennzeichnet, dass** mit einem Verschieben des Blendenkolbens (38) eine am Blendenzylinder (32) angeordnete Bypassleitungsöffnung (54) zu öffnen ist.

8. Hydraulikvorrichtung nach Anspruch 6 oder 7,
   **dadurch gekennzeichnet, dass** in dem Blendenkolben (38) eine Blendenöffnung (44) vorgesehen ist und mit einem Verschieben des Blendenkolbens (38) die Blendenöffnung (44) zu verschließen ist.

9. Hydraulikvorrichtung nach Anspruch 8,
   **dadurch gekennzeichnet, dass** ein Blendenstößel (46) vorgesehen ist, gegen den der Blendenkolben (38) beim Verschieben unter gleichzeitigem Verschließen der Blendenöffnung (44) bewegbar ist.

10. Verwendung einer Hydraulikvorrichtung (26) nach einem der Ansprüche 1 bis 9 an einer Fahrzeugbremsanlage.

**Claims**

1. Hydraulic device (26) for a vehicle braking system, comprising a hydraulic pump (14) for pumping a hydraulic fluid stream into a damper line (18), to which a damper (22) is connected in a fluid-conducting manner,
   **characterized in that** a bypass line (28) bypassing the damper (22) and a bypass valve (30) leading the hydraulic fluid stream optionally through the damper line (18) or the bypass line (28) are provided.

2. Hydraulic device according to Claim 1,
   **characterized in that** a throttle (24) is provided in the damper line (18), downstream of the damper (22) .

3. Hydraulic device according to Claim 1 or 2,
   **characterized in that** the bypass valve (30) is controlled as a function of a volume flow per unit time (34, 36) of the hydraulic fluid stream.

4. Hydraulic device according to one of Claims 1 to 3,
   **characterized in that** the bypass valve (30) is configured with a movable diaphragm (37).

5. Hydraulic device according to Claim 4,
   **characterized in that** the damper line (18) is to be closed and the bypass line (28) is to be opened with a movement of the movable diaphragm (37).

6. Hydraulic device according to Claim 4 or 5,
   **characterized in that** the movable diaphragm (37) is configured as a diaphragm piston (38) that can be displaced in a diaphragm cylinder (32).

7. Hydraulic device according to Claim 6,
   **characterized in that** a bypass line opening (54) arranged on the diaphragm cylinder (32) is to be opened with a displacement of the diaphragm piston (38).

8. Hydraulic device according to Claim 6 or 7,
   **characterized in that** a diaphragm opening (44) is provided in the diaphragm piston (38), and the diaphragm opening (44) is to be closed with a displacement of the diaphragm piston (38).

9. Hydraulic device according to Claim 8,
   **characterized in that** a diaphragm plunger (46) is provided, against which the diaphragm piston (38) can be moved during displacement, with simultaneous closure of the diaphragm opening (44) .

10. Use of a hydraulic device (26) according to one of Claims 1 to 9 on a vehicle braking system.

**Revendications**

1. Dispositif hydraulique (26) pour une installation de frein de véhicule avec une pompe hydraulique (14) pour pomper un courant de fluide hydraulique dans une conduite d'amortisseur (18), à laquelle un amortisseur (22) est hydrauliquement raccordé, **caractérisé en ce qu'**il est prévu une conduite de dérivation (28) contournant l'amortisseur (22) ainsi qu'une vanne de dérivation (30) conduisant le courant de fluide hydraulique au choix à travers la conduite d'amortisseur (18) ou la conduite de dérivation (28).

2. Dispositif hydraulique selon la revendication 1, **caractérisé en ce qu'**il est prévu un étranglement (24) dans la conduite d'amortisseur (18) en aval de l'amortisseur (22).

3. Dispositif hydraulique selon la revendication 1 ou 2, **caractérisé en ce que** la vanne de dérivation (30) est commandée en fonction d'un débit volumique par unité de temps (34, 36) du courant de fluide hydraulique.

4. Dispositif hydraulique selon l'une quelconque des revendications 1 à 3, **caractérisé en ce que** la vanne de dérivation (30) est dotée d'un écran mobile (37).

5. Dispositif hydraulique selon la revendication 4, **caractérisé en ce que** la conduite d'amortisseur (18) peut être fermée et la conduite de dérivation (28) peut être ouverte par un déplacement de l'écran mobile (37).

6. Dispositif hydraulique selon la revendication 4 ou 5, **caractérisé en ce que** l'écran mobile (37) est conçu comme un piston d'écran (38) déplaçable dans un cylindre d'écran (32).

7. Dispositif hydraulique selon la revendication 6, **caractérisé en ce qu'**une ouverture de conduite de dérivation (54) disposée sur le cylindre d'écran (32) peut être ouverte par un déplacement du piston d'écran (38).

8. Dispositif hydraulique selon la revendication 6 ou 7, **caractérisé en ce qu'**il est prévu une ouverture d'écran (44) dans le piston d'écran (38) et l'ouverture d'écran (44) peut être fermée par un déplacement du piston d'écran (38).

9. Dispositif hydraulique selon la revendication 8, **caractérisé en ce qu'**il est prévu un poussoir d'écran (46), contre lequel le piston d'écran (38) peut être déplacé lors du déplacement avec fermeture simultanée de l'ouverture d'écran (44).

10. Utilisation d'un dispositif hydraulique (26) selon l'une quelconque des revendications 1 à 9 dans une installation de frein de véhicule.

**Fig. 1**

EP 2 939 890 B1

Fig. 2

9

**Fig. 3**

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19953001 A1